# FASCICULE DE BREVET EUROPEEN

(11) **EP 1 496 778 B1**
(45) Date de publication et mention de la délivrance du brevet: **30.08.2006**
(21) Numéro de dépôt: 04718676.2
(22) Date de dépôt: 09.03.2004
(51) Int. Cl.: A47J 27/00, B21K 25/00

(54) **DISPOSITIF DE CUISSON DONT L'EMBASE COMPREND UNE PIECE ORNEMENTALE ET PROCEDE DE FABRICATION CORRESPONDANT**
KOCHGERÄT BEI DEM DER MANTEL DES BEHÄLTERBODENS EIN VERZIERUNGSELEMENT UMFASST UND DAZUGEHÖRENDES HERSTELLUNGSVERFAHREN
COOKING UTENSIL THE COVERING OF WHICH COMPRISES AN ORNAMENTAL PIECE AND CORRESPONDING PRODUCTION METHOD

(30) Priorité: 10.03.2003 FR 0303069
(43) Date de publication de la demande: 19.01.2005
(73) Titulaire: SEB S.A., 69132 Ecully Cedex (FR)
(72) Inventeur: BOURDIN, Alain, Gilles, F-21610 Saint Seine Sur Vingeanne (FR); POTY, Jean-François, Marie, F-21000 Dijon (FR)
(74) Mandataire: Martin, Didier Roland Valéry
(86) Numéro de dépôt international: PCT/FR2004/000558
(87) Numéro de publication internationale: WO 2004/081453

(56) Documents cités:
- EP-A- 0 688 526
- EP-A- 1 163 870
- DE-A- 4 125 115

## Description

### DOMAINE TECHNIQUE

La présente invention se rapporte au domaine technique général des dispositifs de chauffage et/ou de cuisson d'aliments à usage domestique, de tels ustensiles étant destinés à assurer la cuisson et/ou le chauffage de substances alimentaires liquides ou solides.

La présente invention concerne plus particulièrement un dispositif de cuisson d'aliments comprenant :
- un récipient destiné à accueillir les aliments et pourvu d'un fond présentant une face interne et une face externe opposée, ladite face externe étant destinée à être disposée en regard d'un moyen de chauffage,
- une embase rapportée sur la face externe et comprenant d'une part, une couche intermédiaire solidarisée à la face externe, et d'autre part, une couche superficielle solidarisée à la couche intermédiaire et recouvrant cette dernière.

L'invention concerne également un procédé de fabrication d'un dispositif de cuisson d'aliments comprenant au moins les étapes suivantes :
a) réalisation ou fourniture d'un récipient destiné à accueillir les aliments et pourvu d'un fond présentant une face interne et une face externe opposée, ladite face externe étant destinée à être disposée en regard d'un moyen de chauffage ;
b) positionnement contre ladite face externe d'une couche intermédiaire ;
c) solidarisation de la couche intermédiaire à la face externe ;
d) recouvrement de la couche intermédiaire par une couche superficielle ;
e) solidarisation de la couche superficielle à la couche intermédiaire.

### TECHNIQUE ANTERIEURE

Il est déjà connu de réaliser des dispositifs de cuisson d'aüments comprenant un récipient destiné à accueillir les aliments en vue de les cuire ou de les réchauffer, ledit récipient étant pourvu d'un fond présentant une face interne et une face externe opposée, ladite face externe étant destinée à être disposée en regard d'un moyen de chauffage, du genre plaque de cuisson ou analogue. A titre d'exemple de tels dispositifs, on peut citer les autocuiseurs sous pression, dont la cuve constitue un récipient de cuisson, les casseroles, poêles, marmites, ou encore les bouilloires.

Afin de favoriser la durabilité d'un tel dispositif de cuisson, il est souhaitable de réaliser le récipient de ce dispositif de cuisson à partir d'un matériau présentant une bonne tenue en service relativement aux contraintes auxquelles est soumis un ustensile de cuisine domestique. Ces contraintes sont d'ordre mécanique (chocs divers, passages en lave-vaisselle), thermique (cycles de cuisson, refroidissement brusque par passage sous l'eau froide à l'issue d'un cycle de cuisson), chimique (phénomènes d'oxydation ou de corrosion favorisés par les opérations de lavage, notamment en lave-vaisselle et les contacts avec les aliments).

L'acier inoxydable étant un matériau présentant, outre une compatibilité alimentaire et un aspect brillant attractif, de très bonnes propriétés de tenue en service relativement aux différentes contraintes précitées, il a naturellement été très souvent retenu pour la fabrication de récipients de cuisson. C'est le cas notamment pour les autocuiseurs, dont la cuve est généralement réalisée à partir d'acier inoxydable. Cependant, l'acier inoxydable présente des caractéristiques banales, voire médiocres en terme de transmission de chaleur, notamment par rapport à l'aluminium ou au cuivre, qui eux présentent au contraire d'excellentes propriétés de conduction thermique, mais de faibles propriétés de tenue en service.

Dès lors, la réalisation d'un récipient de cuisson en acier inoxydable confère des propriétés de cuisson au dispositif de cuisson qui ne seront pas optimales, puisqu'une fraction non négligeable de la chaleur émise par le dispositif de chauffage, du genre plaque de cuisson, ne sera pas transmise aux aliments contenus dans le récipient, du fait des propriétés médiocres de conduction thermique de l'acier inoxydable à partir duquel est réalisé ce récipient.

Afin de surmonter ce problème, il a été proposé de doter le fond des récipients de cuisson réalisés en acier inoxydable d'une embase destinée à améliorer les caractéristiques thermiques, et donc la qualité de cuisson, des dispositifs dotés d'un tel récipient. A cette fin, l'embase est rapportée sur le fond du récipient, et comprend d'une part, une couche intermédiaire en aluminium (présentant donc d'excellentes qualités thermiques) et d'autre part, une couche superficielle de protection en acier inoxydable, solidarisée à la couche intermédiaire et recouvrant cette dernière. De cette façon, le fond de l'autocuiseur bénéficie des bonnes propriétés de conduction thermique de l'aluminium, tout en conservant une enveloppe externe de protection en acier inoxydable qui garantit une bonne tenue en service de l'ensemble. L'aluminium, qui présente des propriétés de tenue en service médiocres, notamment vis-à-vis de l'oxydation, de la corrosion, ainsi que de la rigidité, est totalement « *pris en sandwich* » entre le fond du récipient d'une part, et la couche superficielle en acier inoxydable d'autre part, ce qui l'isole et le protège complètement de l'environnement extérieur.

Un tel agencement donne généralement satisfaction, puisqu'il permet d'obtenir un compromis intéressant entre des propriétés de tenue en service et de transmission thermique.

Par ailleurs, afin d'améliorer l'esthétique générale d'un tel dispositif de cuisson, il est connu de décorer la face extérieure (i.e. celle destinée à être en contact avec la plaque de cuisson) de l'embase précédemment décrite. Cette décoration peut notamment consister à rapporter sur cette face extérieure en acier inoxydable une fine pastille métallique. Un tel procédé de décoration est décrit dans le fascicule de brevet européen EP-613 752. Ce document décrit ainsi la réalisation d'une embase décorée obtenue en superposant, sur la face externe du fond d'un récipient de cuisson, une plaque d'aluminium, une coupelle en acier inoxydable et une pastille de décoration métallique. L'ensemble est chauffé, puis est soumis à une pression pour obtenir une liaison entre les différents éléments précités.

De cette façon, on obtient un ustensile de cuisson dont la surface de l'embase présente une rainure en creux de démarcation entre la pastille métallique et la surface en acier inoxydable de la coupelle superficielle. Cette rainure en creux, qui suit le contour de la pastille métallique, constitue ainsi un motif de décoration.

Un ustensile ainsi décoré présente cependant les inconvénients suivants.

La présence d'une rainure en creux, du genre gorge, dans l'embase est favorable à la rétention de salissures, notamment d'origine alimentaire, ou tout simplement d'eau et/ou de produits de lavage. Outre les désagréments bien compréhensibles que cela peut procurer à l'utilisateur, une telle rétention de salissures peut être également de nature à favoriser des phénomènes d'oxydation et/ou de corrosion.

De plus, l'adjonction d'une pastille métallique supplémentaire contre la coupelle extérieure de l'embase vient ajouter une épaisseur supplémentaire entre la couche d'aluminium présente dans l'embase et la plaque de cuisson, ce qui nuit aux propriétés thermiques du dispositif de cuisson.

Enfin, lorsque la pastille métallique rapportée sur la cuvette est en cuivre, ce qui s'avère particulièrement recherché et prisé puisque l'aspect visuel du cuivre est intimement lié à l'univers de la cuisine, il est nécessaire de positionner un film de liaison entre la cuvette en acier inoxydable et la pastille de cuivre. En effet, l'affinité de liaison entre le cuivre et l'acier inoxydable n'est pas suffisante pour obtenir un encastrement correct de la pastille de cuivre dans la cuvette en acier inoxydable, à l'issue du procédé de fabrication décrit précédemment. L'ajout d'une couche de liaison, par exemple en aluminium, entre le cuivre et l'acier inoxydable vient dès lors compliquer le process de fabrication, et augmenter le prix de revient du dispositif de cuisson.

**Le document EP-0 688 526 décrit un dispositif de cuisson comprenant :**
- **un récipient destiné à accueillir les aliments et pourvu d'un fond présentant une face interne et une face externe opposée, ladite face externe étant destinée à être disposée en regard d'un moyen de chauffage,**
- **une embase rapportée sur la face externe et comprenant d'une part, une couche intermédiaire solidarisée à la face externe, et d'autre part, une couche superficielle solidarisée à la couche intermédiaire et recouvrant cette dernière;**

**la couche superficielle étant percée d'une pluralité d'ajours destinés à accueillir des pièces correspondantes délimitées chacune par une périphérie latérale correspondante.**

**Le document FR-2 735 708 décrit quant à lui un procédé de fabrication d'un récipient de cuisson à double paroi par frappe à chaud.**

### EXPOSE DE L'INVENTION

Les objets assignés à l'invention visent en conséquence à porter remède aux différents inconvénients énumérés précédemment, et à proposer un nouveau dispositif de cuisson d'aliments dont l'embase est décorée et présente une surface continue exempte d'aspérités ou d'anfractuosités.

Un autre objet de l'invention vise à proposer un nouveau dispositif de cuisson à embase décorée dont l'aspect est particulièrement attractif.

Un autre objet de l'invention vise à proposer un nouveau dispositif de cuisson à embase décorée dont les caractéristiques thermiques sont améliorées.

Un autre objet de l'invention vise à proposer un nouvel appareil de cuisson à embase décorée dont la durabilité est améliorée.

Un autre objet de l'invention vise à proposer un nouveau dispositif de cuisson à embase décorée compatible avec des moyens de chauffage à induction.

Un autre objet de l'invention vise à proposer un nouveau dispositif de cuisson dont la conception et la fabrication sont particulièrement simples et économiques.

Un autre objet de l'invention vise à proposer un nouveau procédé de fabrication d'un dispositif de cuisson à embase décorée particulièrement simple, rapide et peu onéreux à mettre en oeuvre.

Un autre objet de l'invention vise à proposer un nouveau procédé de fabrication d'un dispositif de cuisson à embase décorée autorisant la réalisation d'une grande variété de décorations.

Un autre objet de l'invention vise à proposer un nouveau procédé de fabrication d'un dispositif de cuisson d'aliments à embase décorée dont la mise en oeuvre est réalisable à l'aide de moyens industriels conventionnels.

Les objets assignés à l'invention sont atteints à l'aide d'un dispositif de cuisson d'aliments comprenant :
- un récipient destiné à accueillir les aliments et pourvu d'un fond présentant une face interne et une face externe opposée, ladite face externe étant destinée à être disposée en regard d'un moyen de chauffage,
- une embase rapportée sur la face externe et comprenant d'une part, une couche intermédiaire solidarisée à la face externe, et d'autre part, une couche superficielle solidarisée à la couche intermédiaire et recouvrant cette dernière,
la couche superficielle étant percée d'au moins un ajour, lequel est destiné à accueillir de façon sensiblement ajustée une pièce ornementale délimitée par une périphérie latérale 100, caractérisé en ce que ladite pièce ornementale 7 est directement liée, par une première opération de compression à chaud, à la couche intermédiaire 5, de façon à ce que d'une part la pièce ornementale 7 s'étende sensiblement dans la continuité de la couche superficielle 6, et d'autre part la périphérie latérale 100 de la pièce ornementale 7 soit liée de façon intime et directe à la couche superficielle 6.

Les objets assignés à l'invention sont également atteints à l'aide d'un procédé de fabrication d'un dispositif de cuisson d'aliments comprenant au moins les étapes suivantes :
a) réalisation ou fourniture d'un récipient destiné à accueillir les aliments et pourvu d'un fond présentant une face interne et une face externe opposée, ladite face externe étant destinée à être disposée en regard d'un moyen de chauffage ;
b) positionnement contre ladite face externe d'une couche intermédiaire ;
c) solidarisation de la couche intermédiaire à la face externe ;
d) recouvrement de la couche intermédiaire par une couche superficielle ;
e) solidarisation de la couche superficielle à la couche intermédiaire ;
ledit procédé comprenant :
- préalablement à l'étape d), une étape f) d'ajourage de la couche superficielle de façon à ce qu'elle soit percée d'au moins un ajour, ou de fourniture d'une couche superficielle préalablement ajourée,
- postérieurement à l'étape d), une étape g) de positionnement de façon sensiblement ajustée d'au moins une pièce ornementale, délimitée par une périphérie latérale, dans l'ajour correspondant,
ledit procédé étant caractérisé en ce qu'il comprend, postérieurement à l'étape g), une étape h) de solidarisation directe par une première opération de compression à chaud d'au moins la couche intermédiaire et la pièce ornementale, de façon à ce que d'une part la pièce ornementale s'étende sensiblement dans la continuité de la couche superficielle, et d'autre part que la périphérie latérale de la pièce ornementale soit liée, de façon intime et directe, à la couche superficielle.

### DESCRIPTIF SOMMAIRE DES DESSINS

D'autres particularités et avantages de l'invention apparaîtront plus en détails à la lecture de la description qui suit, en référence aux dessins annexés donnés à titre d'exemples illustratifs et non limitatifs, dans lesquels :
- Les figures 1 et 2 illustrent, de façon chronologique et selon une vue schématique en coupe verticale, des étapes du procédé de fabrication d'un dispositif de cuisson conforme à l'invention.
- La figure 3 illustre, selon une vue schématique en coupe verticale, un dispositif de cuisson d'aliments conforme à l'invention.
- La figure 4 illustre, selon une vue de dessous, un dispositif de cuisson conforme à l'invention.
- Les figures 5 à 7 illustrent différentes variantes de réalisation d'ajours dans la couche superficielle de l'embase du dispositif de cuisson conforme à l'invention.

### MEILLEURE MANIERE DE REALISER L'INVENTION

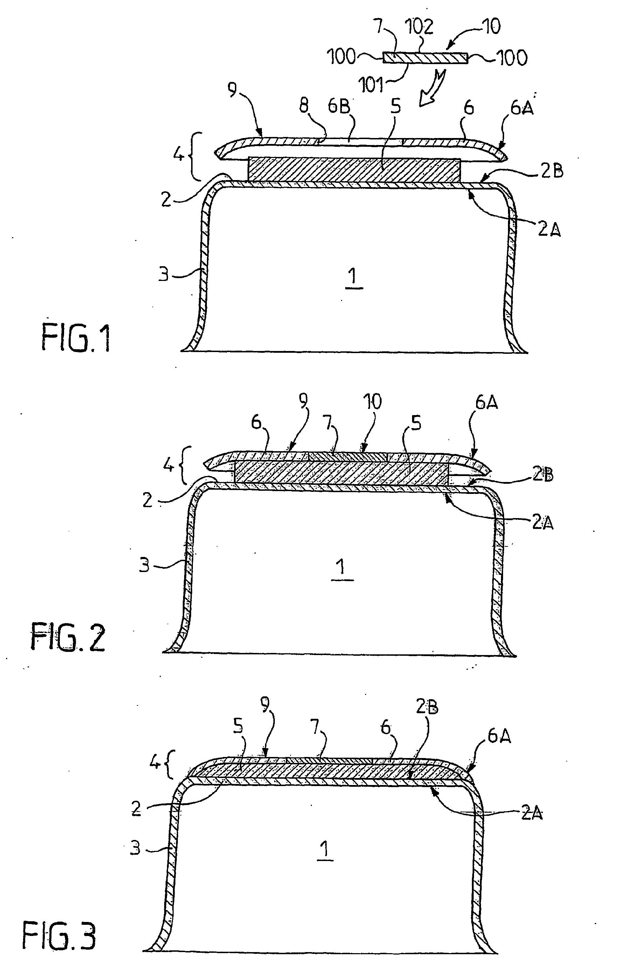

Les figures 1 à 4 illustrent un dispositif de cuisson conforme à l'invention et à différents stades de fabrication, la figure 3 présentant un dispositif de cuisson dont la fabrication est achevée.

Tel que cela est visible aux figures, le dispositif de cuisson d'aliments conforme à l'invention comprend un récipient 1, destiné à accueillir les aliments que l'on souhaite cuire ou faire simplement chauffer.

Le récipient 1 est pourvu d'un fond 2 présentant une face interne 2A et une face externe 2B opposée, ladite face externe 2B étant destinée à être disposée en regard d'un moyen de chauffage, du genre plaque de cuisson (à gaz, électrique, vitro-céramique ou induction), brûleur, réchaud ou analogue.

Le dispositif de cuisson conforme à l'invention présente donc une double fonction, à savoir une fonction de rétention et/ou de support d'aliments, et une fonction de communication à ces aliments de l'énergie thermique dispensée par le moyen de chauffage externe. L'invention concerne tout dispositif de cuisson présentant cette double fonction. Le dispositif de cuisson selon l'invention pourra notamment être constitué par un des ustensiles du groupe suivant : autocuiseurs sous pression, casseroles, poêles, marmites, ou encore bouilloires. Dans le cas d'un autocuiseur sous pression, le récipient 1 constitue la cuve de l'autocuiseur.

De façon classique, le récipient 1 peut être délimité par des parois extérieures 3 s'élevant sensiblement verticalement à partir du fond 2.

De façon préférentielle, le récipient 1 est réalisé à partir d'un premier matériau présentant de bonnes propriétés de tenue en service, du genre résistance mécanique ou encore résistance à la corrosion. Ce premier matériau, à partir duquel est réalisé le récipient 1, sera choisi préférentiellement pour être résistant, de façon durable dans le temps, à toutes les sollicitations auxquelles sont usuellement soumis les ustensiles domestiques de cuisson (cycles de cuisson, lavages, chocs...).

De façon préférentielle, ledit premier matériau, à partir duquel est réalisé le récipient 1, est à base ou est entièrement constitué d'acier inoxydable. Avantageusement, ce premier matériau est un acier inoxydable austénitique.

Conformément à l'invention, le dispositif de cuisson d'aliments comprend une embase 4 rapportée sur la face externe 2B du fond 2. L'embase 4 permet au dispositif de cuisson d'aliments de reposer de façon stable sur une surface d'appui sensiblement plane, et notamment sur un moyen de chauffage du genre plaque de cuisson.

Conformément à l'invention, l'embase 4 comprend d'une part une couche intermédiaire 5 se présentant par exemple sous la forme d'une plaque, ou d'un empilement de plaques, ou encore d'une série de plots de matière distincts. La couche intermédiaire 5 couvre, de façon avantageuse, tel que cela est représenté aux figures, la quasi-totalité de la face externe 2B du fond 2. Il est cependant envisageable, sans pour autant sortir du cadre de l'invention, que la couche intermédiaire 5 ne couvre qu'une fraction de la face externe 2B du fond 2. La couche intermédiaire 5 est solidarisée à la face externe 2B, soit de façon ponctuelle, mais plus préférentiellement de façon sensiblement uniforme sur toute l'interface de contact entre la couche intermédiaire 5 et la face externe 2B.

De façon avantageuse, la couche intermédiaire 5 est réalisée à partir d'un matériau bon conducteur de chaleur. De façon préférentielle, ledit matériau bon conducteur de chaleur est à base ou est constitué d'aluminium ou de cuivre, ou encore d'une combinaison de ces deux matériaux, sous la forme d'un complexe colaminé par exemple.

Conformément à l'invention, l'embase 4 comprend d'autre part une couche superficielle 6 recouvrant la couche intermédiaire 5, de telle sorte que la couche intermédiaire 5 est intercalée entre d'un côté, la face externe 2B du fond 2, et de l'autre côté, la couche superficielle 6.

La couche superficielle 6 se présente avantageusement sous la forme d'une plaque, dont le bord 6A est préférentiellement recourbé de façon à englober complètement la couche intermédiaire 5, le bord 6A venant épouser la périphérie de la face externe 2B du fond 2. Avantageusement, la couche superficielle 6 est réalisée à partir d'un deuxième matériau présentant de bonnes propriétés de tenue en service, du genre résistance mécanique, résistance à la corrosion. Ce deuxième matériau doit être choisi préférentiellement de façon à présenter des caractéristiques sensiblement similaires, du point de vue de la tenue en service et de la durabilité, à celles du matériau mis en oeuvre pour la réalisation du récipient 1. De façon avantageuse, ce deuxième matériau est à base ou est entièrement constitué d'acier inoxydable.

Avantageusement, ce deuxième matériau présente des propriétés magnétiques, du genre perméabilité magnétique, telles que le dispositif de cuisson est compatible avec un moyen de chauffage à induction. De façon préférentielle, ce deuxième matériau est un acier inoxydable ferritique.

Conformément à l'invention, la couche superficielle 6 est solidarisée à la couche intermédiaire 5 de façon ponctuelle, ou plus préférentiellement de façon sensiblement uniforme, sur toute l'interface de contact entre la couche intermédiaire 5 et la couche superficielle 6.

Selon une caractéristique importante de l'invention, la couche superficielle 6 est ajourée, c'est-à-dire qu'elle est percée d'au moins un ajour 6A-D, à savoir un orifice de forme déterminée traversant entièrement l'épaisseur de la couche superficielle 6.

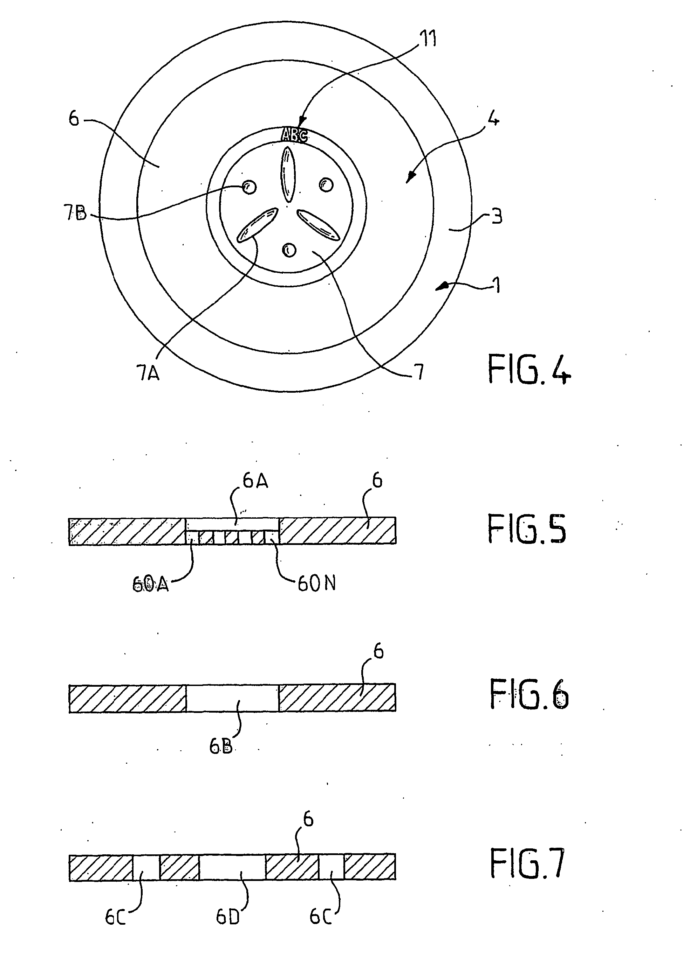

Les figures 5 à 7 illustrent, de façon non limitative, différents modes de réalisation d'un ou plusieurs ajours 6A-D. Il est ainsi envisageable, tel que cela est représenté aux figures 1 et 6, que l'ajour 6B se présente sous la forme d'un trou débouchant traversant l'épaisseur de la couche superficielle 6. Ce trou peut être de section quelconque, et notamment de section circulaire. Tel que cela est représenté à la figure 5, l'ajour peut être complexe, c'est-à-dire présenter des variations et des modifications de section dans l'épaisseur de la couche superficielle 6. Dans le cas de l'exemple d'ajour 6A présenté à la figure 5, l'ajour 6A se présente, jusqu'à mi-épaisseur de la couche superficielle 6, sous la forme d'un orifice simple, qui communique ensuite, sur la moitié d'épaisseur restante, avec une multitude d'orifices de section inférieure 60A-N qui sont disposés par exemple à la façon d'une grille. Tel que cela est représenté à la figure 7, il est également tout à fait envisageable de réaliser plusieurs ajours 6C, 6D de formes différentes dans la couche superficielle 6, et notamment un ajour de section circulaire 6D entouré par un ajour annulaire 6C.

Le ou les ajours 6A-D sont destinés chacun à accueillir, de façon sensiblement ajustée, une pièce ornementale correspondante 7, délimitée par une périphérie latérale 100. Cette pièce ornementale 7 peut avantageusement se présenter sous la forme d'une plaque pleine, s'étendant axialement entre une face inférieure 101, destinée à venir en contact avec la couche intermédiaire 5 et une face supérieure 102 opposée, lesdites faces inférieure et supérieure 101, 102 étant reliées par une paroi latérale formant la périphérie latérale 100.

Cette pièce ornementale peut cependant, sans pour autant sortir du cadre de l'invention, se présenter sous la forme d'une plaque pourvue de trous, d'une grille, ou encore sous la forme d'une série de plots distincts.

Tel que cela est illustré à la figure 4, la pièce ornementale 7 pourra se présenter sous la forme d'une plaque munie de décorations 7A, 7B apparaissant en creux ou en relief.

De façon avantageuse, la pièce ornementale 7 est réalisée à partir d'un ou plusieurs des matériaux du groupe suivant : cuivre, titane, laiton, fer, nickel, acier, cette liste n'étant bien sûr nullement limitative.

Lorsque plusieurs pièces ornementales distinctes sont rapportées dans leurs ajours correspondants, il est tout à fait envisageable, dans le cadre de l'invention, que ces pièces ornementales soient réalisées à partir de matériaux différents. On peut ainsi envisager une plaque centrale en cuivre, et des plaques périphériques en laiton ou en acier par exemple. Il est également tout à fait envisageable qu'une pièce ornementale 7 soit formée de plusieurs feuilles de matériaux différents colaminés pour former un complexe multi-couches.

De façon préférentielle, le dispositif de cuisson conforme à l'invention comprendra une unique pièce ornementale 7, se présentant sous la forme d'une plaque pleine, c'est-à-dire non ajourée, positionnée dans un ajour 6B correspondant, ménagé sensiblement au centre de la couche superficielle 6.

Dans ce qui suit, on fera référence, pour des raisons de facilité de description, à une embase dotée d'une pièce ornementale 7 unique. Ainsi qu'on l'a vu précédemment, l'invention ne se limite cependant en aucune manière à ce seul cas de figure.

Selon une caractéristique importante de l'invention, la pièce ornementale 7 est directement liée, par une première opération de compression à chaud, à la couche intermédiaire 5, de façon à ce que la pièce ornementale 7 s'étende sensiblement dans la continuité de la couche superficielle 6.

La compression à chaud est une technique bien connue de l'homme du métier. Elle consiste notamment à chauffer des éléments, et à leur appliquer une pression, par exemple à l'aide d'une presse, pour les solidariser entre eux.

Dans le cadre de l'invention, les dimensions relatives de la couche superficielle 6, de la pièce ornementale 7, ainsi que de l'ajour 6B sont préférentiellement choisies de façon à ce qu'à l'issue de la première opération de compression à chaud, la pièce ornementale 7 épouse le bord 8 de l'ajour 6B et vienne sensiblement affleurer la surface extérieure 9 de la couche superficielle 6, de telle sorte que la surface affleurante 10 de la pièce 7 se situe sensiblement au même niveau que celui de la zone de la surface extérieure 9 qui lui est contiguë. De cette façon, tout en isolant la couche intermédiaire 5 de l'environnement extérieur, la continuité de l'enveloppe extérieure 9, 10 de l'embase 4 est assurée, sans démarcation du genre gorge, ou anfractuosités non désirées.

En d'autres termes, l'opération de compression à chaud, qui est de préférence, comme on le verra par la suite, une opération de frappe à chaud, permet d'une part de lier intimement et directement la face inférieure 101 à la couche intermédiaire 5, et d'autre part d'assurer la liaison latérale directe de la pièce 7 à la couche superficielle 6, de telle sorte que la périphérie latérale 100 de la pièce ornementale 7 est liée de façon intime et directe à la couche superficielle 6.

De plus, la solidarisation par compression à chaud de la couche intermédiaire 5 et de la pièce ornementale 7 permet de réaliser une liaison intime, que l'on pourrait qualifier de liaison atomique, entre ces deux éléments, ce qui, lorsque notamment cette solidarisation intime est assurée de façon uniforme sur toute l'interface de contact entre la pièce ornementale 7 et la couche intermédiaire 5, permet d'optimiser le transfert de l'énergie thermique du moyen de chauffage externe vers le récipient 1 via la couche intermédiaire 5.

De façon préférentielle, la première opération de compression à chaud est une opération de frappe à chaud. La frappe à chaud est une technique bien connue de l'homme du métier. Elle consiste à effectuer une compression rapide, assimilable à un impact, à chaud.

Avantageusement, la couche superficielle 6 est également solidarisée directement à la couche intermédiaire 5 par une deuxième opération de compression à chaud, de préférence de façon sensiblement uniforme sur toute l'interface de contact entre la couche superficielle 6 et la couche intermédiaire 5.

De manière préférentielle, la deuxième opération de compression à chaud est une opération de frappe à chaud. Il est cependant tout à fait envisageable, sans sortir du cadre de l'invention, que la couche superficielle 6 soit solidarisée à la couche intermédiaire 5 par un autre moyen, par exemple par brasage.

Avantageusement, la couche intermédiaire 5 est également solidarisée directement à la face externe 2B du fond 2 par une troisième opération de compression à chaud, de préférence de façon sensiblement uniforme sur toute l'interface de contact entre la couche intermédiaire 5 et la face externe 2B du fond 2.

De manière préférentielle, la troisième opération de compression à chaud est une opération de frappe à chaud. Il est cependant tout à fait envisageable, sans sortir du cadre de l'invention, que la couche intermédiaire 5 soit solidarisée à la face externe 2B par tout autre moyen, et par exemple par brasage.

De façon encore plus préférentielle, la face externe 2B du fond 2, la couche intermédiaire 5, la couche superficielle 6, ainsi que la pièce ornementale 7 sont solidarisées ensemble, de façon sensiblement uniforme sur toutes leurs interfaces de contact respectives, par une opération unique et commune de compression à chaud. De cette façon, la pièce ornementale 7 est intimement liée à la fois à la couche superficielle 6 (latéralement) et surtout à la couche intermédiaire 5, tandis que cette couche intermédiaire 5 est intimement liée à la face externe 2B du fond 2, la couche superficielle 6 étant de surcroît solidarisée périphériquement à la couche externe 2B du fond 2.

Avantageusement, cette opération unique et commune de compression à chaud est une opération de frappe à chaud.

L'embase 4 du dispositif de cuisson conforme à l'invention présente ainsi un caractère unitaire et monobloc, où les matériaux (qui peuvent être tous différents) constituant ces différents éléments sont intimement et directement liés, en mettant en jeu des phénomènes d'inter-pénétrations que l'on pourrait qualifier de liaisons atomiques, ce qui permet d'optimiser notamment les qualités mécaniques et de conduction thermique globales de l'embase 4. Ces qualités peuvent être notablement améliorées, lorsque la pièce de décoration 7 est réalisée à partir d'un matériau présentant de bonnes propriétés de conduction thermique, tel que le cuivre. En effet, il sera ainsi établi une connexion thermique privilégiée entre le moyen de chauffage externe (par exemple une plaque de cuisson) et la couche intermédiaire 5, puisque cette dernière est intimement liée à un matériau bon conducteur formant l'élément de décoration 7.

L'invention concerne également un procédé de fabrication d'un dispositif de cuisson d'aliments. Le procédé de fabrication conforme à l'invention comprend au moins les étapes suivantes :
a) réalisation d'un récipient 1 destiné à accueillir les aliments et pourvu d'un fond 2 présentant une face interne 2A et une face externe 2B opposée, ladite face externe 2B étant destinée à être disposée en regard d'un moyen de chauffage (non représenté) ;
b) positionnement contre ladite face externe d'une couche intermédiaire 5, tel que cela est représenté à la figure 1 ;
c) solidarisation de la couche intermédiaire 5 à la face externe 2B ;
d) recouvrement de la couche intermédiaire 5 par une couche superficielle 6, tel que cela est illustré à la figure 1 ;
e) solidarisation de la couche superficielle 6 à la couche intermédiaire 5, tel que cela est illustré à la figure 2.

Il est bien évidemment possible également de débuter le procédé à partir d'un récipient déjà réalisé au préalable, sans sortir du cadre de l'invention.

Dans ce cas, l'étape a) comprendra simplement la fourniture du récipient 1.

Il est bien sûr également envisageable que des couches supplémentaires, par exemple de matériaux de collage, de soudure ou de brasage, soient intercalées entre la face externe 2B du fond 2 et la couche intermédiaire 5, ou encore entre la couche intermédiaire 5 et la couche superficielle 6, sans pour autant sortir du cadre de l'invention.

Conformément à une caractéristique importante de l'invention, le procédé de fabrication comprend, préalablement à l'étape d), une étape f) d'ajourage de la couche superficielle 6, de façon à ce qu'elle soit percée d'au moins un ajour 6A-D. L'ajourage de la couche superficielle 6 peut être effectué selon toute méthode connue de l'homme du métier, et notamment par découpe ou poinçonnage. Les figures 5 à 7 illustrent différentes possibilités de réalisation d'ajours, c'est-à-dire de trous traversant de part en part l'épaisseur de la couche superficielle 6. Il est bien sûr envisageable, sans sortir du cadre de l'invention, que la couche superficielle 6 soit préalablement ajourée de façon distincte de la série d'étapes du procédé conforme à l'invention. Dans ce cas, l'étape f) comprend simplement la fourniture d'une couche superficielle 6 préalablement ajourée.

Le procédé conforme à l'invention comprend également, postérieurement à l'étape d), une étape g) dans laquelle on positionne, de façon sensiblement ajustée, au moins une pièce ornementale 7 dans un ajour correspondant 6B, tel que cela est représenté à la figure 2.

Dans ce qui suit, pour des raisons de facilité de description, on se limitera à décrire une couche superficielle dotée d'un seul ajour 6B, dans lequel on insère une unique pièce ornementale 7. Il est bien évident que le nombre, la forme et la disposition des ajours, ainsi que des pièces ornementales correspondantes ne sont limités en aucune manière dans le cadre de l'invention.

Conformément à l'invention, le procédé comporte, postérieurement à l'étape g), une étape h) dans laquelle on solidarise, par une première opération de compression à chaud, au moins la couche intermédiaire 5 et la pièce ornementale 7, de façon à ce que d'une part la pièce ornementale 7 s'étende sensiblement dans la continuité de la couche superficielle 6, et d'autre part que la périphérie latérale 100 de la pièce ornementale 7 soit liée, de façon intime et directe, à la couche superficielle 6, en particulier sans interposition de matière tierce (du genre soudure) entre la périphérie 100 et la couche superficielle 6.

En d'autres termes, la solidarisation de la périphérie latérale 100 avec la couche superficielle 6 est obtenue exclusivement par la première opération de compression à chaud, de sorte que le procédé inventif ne nécessite pas la mise en oeuvre, préalablement à ladite opération de compression à chaud, d'une opération préliminaire de fixation de la pièce ornementale 7 relativement à la couche superficielle 6.

La première opération de compression à chaud est donc suffisante pour réaliser un accostage entre la périphérie latérale 100 et la couche superficielle 6 qui répondent à toutes les exigences fonctionnelles (étanchéité) et esthétiques (délimitation visuelle nette des différentes pièces) requises dans le domaine technique, sans apport de matière supplémentaire.

Avantageusement, la première opération de compression à chaud est une opération de frappe à chaud.

Les techniques de compression à chaud, et plus particulièrement de frappe à chaud, sont bien connues de l'homme du métier, et ne seront donc pas explicitées plus en détail ici. Pour mémoire, la compression à chaud consiste d'une part à chauffer des pièces à assembler et/ou déformer pour les rendre plus malléables, et d'autre part à les soumettre à une pression, à l'aide par exemple d'une presse de forge, du genre presse à vis ou presse à énergie cinétique, pour lier lesdits éléments de façon intime, au niveau notamment de leurs structures microscopiques, tout en les mettant en forme éventuellement.

La frappe à chaud est un mode de réalisation de compression à chaud, dans lequel la compression, ou mise en pression, est effectuée de façon rapide, à la manière d'une impaction.

L'homme du métier choisira les dimensions relatives de la pièce ornementale 7 et de l'ajour 6B, de façon à ce qu'à l'issue de l'opération de frappe à chaud, la pièce ornementale 7 épouse de façon intime les bords de l'ajour 6B, tout en étant liée, de préférence de façon uniforme, sur toute l'interface de contact entre ladite pièce ornementale 7 et la couche intermédiaire 5 par une liaison, du genre liaison atomique, avec la couche intermédiaire 5.

L'homme du métier choisira également les épaisseurs respectives de la pièce ornementale 7 et de la couche superficielle 6, ou du moins de la zone de la couche superficielle 6 adjacente à la périphérie de l'ajour 6B, de façon à ce que la pièce ornementale 7, à l'issue de la frappe à chaud, s'étende dans la continuité, c'est-à-dire sensiblement au même niveau que la surface extérieure 9 de la zone de la couche superficielle 6 entourant l'ajour 6B.

Avantageusement, l'étape e) est réalisée par une deuxième opération de compression à chaud qui, de manière préférentielle, est une opération de frappe à chaud.

De manière préférentielle, la solidarisation, de préférence directe, de la couche superficielle 6 à la couche intermédiaire 5 est menée de telle sorte qu'elle soit sensiblement uniforme sur toute l'interface de contact entre ladite couche intermédiaire 5 et la couche superficielle 6.

Avantageusement, l'étape c) du procédé conforme à l'invention est réalisée par une troisième opération de compression à chaud qui, de manière préférentielle, est une opération de frappe à chaud.

De manière préférentielle, cette opération est menée de façon à solidariser, de préférence directement, la couche intermédiaire 5 à la face externe 2B du fond 2, de manière sensiblement uniforme sur toute l'interface de contact entre la couche intermédiaire 5 et la face externe 2B.

De manière particulièrement avantageuse, les étapes c), e) et h) sont réalisées simultanément par une unique opération commune de compression à chaud, ou plus préférentiellement par une unique opération de frappe à chaud. Ainsi, à l'aide exclusivement d'un simple empilement des éléments composant le dispositif de cuisson, suivi d'une unique opération de frappe à chaud, l'invention permet d'obtenir un dispositif de cuisson présentant d'excellentes qualités d'usage ainsi qu'un très bon aspect visuel.

Avantageusement, le procédé selon l'invention comprend une étape i) qui intervient de préférence au plus tard concomitamment à l'étape d).

Dans cette étape i), on réalise une couche superficielle 6 en forme de coupelle, de façon à ce que lors de l'étape d) et/ou de l'étape e), la couche superficielle 6 soit susceptible d'englober la couche intermédiaire 5, en s'appuyant périphériquement contre la face externe 2B du fond 2. De cette façon, la couche superficielle 6 assure une isolation complète de la couche intermédiaire 5 vis-à-vis de l'environnement extérieur, ce qui favorise la protection de ladite couche intermédiaire 5.

Il est cependant tout à fait envisageable que la couche superficielle 6 ne se présente pas sous forme de coupelle, c'est-à-dire ne comporte pas de bord replié 6A, tel que cela est représenté aux figures 5 à 7, sans sortir du cadre de l'invention.

Avantageusement, les étapes c), e), h) et i) sont réalisées simultanément par une unique opération de compression à chaud. Dans ce cas, l'opération de compression à chaud, outre le fait qu'elle assure la liaison intime entre les différents éléments concernés, assure également le formage de la coupelle 6, par exemple à partir d'un flan plat.

De façon préférentielle, cette unique opération de compression à chaud est une opération de frappe à chaud.

Avantageusement, les étapes a), c), e), h) et i) sont réalisées simultanément par une unique et commune opération de compression à chaud qui, de façon préférentielle, est une opération de frappe à chaud.

Dans ce cas, l'opération de compression à chaud permet, outre la liaison intime entre tous les éléments du dispositif concerné, le formage du récipient 1, par exemple à partir d'un flan plat.

De façon préférentielle, le récipient 1, la couche intermédiaire 5, la couche superficielle 6 et la pièce ornementale 7 sont réalisés à partir de flans métalliques, qui se présentent sous la forme de feuilles planes mono- ou multi-matériaux.

De façon préférentielle, le récipient 1 est réalisé à partir d'un flan en acier inoxydable austénitique.

De façon préférentielle, la couche intermédiaire 5 est réalisée à partir d'un flan en aluminium et/ou en cuivre.

De façon préférentielle, la couche superficielle 6 est réalisée à partir d'un flan en acier inoxydable ferritique, de façon à conférer des propriétés de compatibilité avec les dispositifs de chauffage à induction au dispositif de cuisson.

De façon préférentielle, la pièce ornementale 7 est réalisée à partir d'un flan à base d'un ou plusieurs des matériaux suivants : cuivre, titane, laiton, fer, nickel, acier.

Il est bien sûr tout à fait envisageable de choisir des matériaux différents pour les éléments précités, sans pour autant sortir du cadre de l'invention.

Le procédé de fabrication conforme à l'invention permet ainsi de réaliser très simplement et à moindre coût tous les ustensiles de cuisine connus, à usage domestique ou professionnel, qui sont destinés à communiquer à des aliments de la chaleur produite par un moyen de chauffage externe, du genre plaque de cuisson.

Le procédé de fabrication conforme à l'invention permettra notamment la fabrication d'un des ustensiles du groupe suivant : autocuiseurs sous pression, casseroles, poêles, marmites, bouilloires, cette liste n'étant bien sûr nullement limitative.

Un exemple de réalisation d'un dispositif de cuisson conforme à l'invention va maintenant être décrit.

On fournit un récipient de cuisson 1 pourvu d'un fond 2 présentant une face interne 2A et une face externe 2B. Le récipient 1 a été obtenu séparément de façon classique par emboutissage d'un flan en acier inoxydable austénitique. L'épaisseur de la coque formant le récipient 1 est comprise par exemple entre 0,5 et 1,5 mm. Le récipient 1 présente une symétrie de révolution. Il peut être cependant ovale ou polygonal.

On dépose ensuite sur la face externe 2B du fond 2, un flan en aluminium 5, dont l'épaisseur est comprise par exemple entre 3 et 10 mm.

On dépose ensuite sur ce flan en aluminium, une coupelle de protection en acier inoxydable ferritique 6, dont l'épaisseur est comprise par exemple entre 0,4 mm et 1 mm. La coupelle 6 se présente sous la forme d'un flan, qui a été au préalable ajouré, c'est-à-dire percé d'un orifice traversant 6B.

On introduit dans cet orifice 6B un flan plein en cuivre 7, dont l'épaisseur est comparable à celle de la coupelle. Les dimensions du flan formant l'élément de décoration 7 sont choisies pour s'ajuster sensiblement au contour de l'ajour 6B.

L'ensemble des éléments formant l'empilement précédemment décrit est ensuite porté à une température supérieure à 400°C, et par exemple comprise entre 440 et 460 °C.

Puis l'empilement est soumis à une compression entre une enclume s'appuyant sur la face interne 2A du fond 2 et une empreinte s'appuyant sur les surfaces extérieures 9, 10 de la couche superficielle 6 et de l'élément décoratif 7. L'effort de compression est exercé par une presse à énergie cinétique développant par exemple une pression de l'ordre de 900 à 1000 tonnes.

Sous l'effet de cette pression, les flans 5, 6, 7 vont se déformer et se lier intimement les uns aux autres, de telle sorte que les bords 6A de la coupelle 6 épousent et sont intimement liés à la face externe 2B du fond 2, tandis que l'intervalle entre la face externe 2B du fond 2 et la couche superficielle 6 est uniformément et complètement rempli par l'aluminium du flan 5, qui s'est écoulé sous l'effet conjugué de la chaleur et de la pression. L'élément décoratif 7 s'est lui-même étalé, de façon à épouser uniformément et directement les bords de l'orifice 6B. L'élément décoratif 7 est également intimement et uniformément lié à la couche intermédiaire 5. II faut enfin noter que le jeu entre l'élément de décoration 7 et l'ajour 6B est choisi de façon à éviter toute fuite d'aluminium provenant du flan 5 à travers ledit jeu, lors de l'opération de frappe à chaud.

Il est également possible, lors de l'opération de frappe à chaud, d'imprimer en creux et/ou en relief des motifs de décoration 11 directement dans la couche superficielle 6. De tels motifs peuvent consister par exemple dans des inscriptions diverses, tel que cela est représenté à la figure 4.

Ainsi, l'invention permet d'obtenir un dispositif de cuisson présentant une embase 4 décorée compacte, ne présentant sensiblement aucun creux ou vide dans sa structure interne, ce qui permet d'optimiser la transmission thermique vers la face interne, du fond 2A. De plus, la liaison intime entre l'élément de décoration 7, qui peut être également un très bon conducteur de chaleur, et l'élément principal de conduction de chaleur formé par la couche intermédiaire 5, permet d'améliorer les propriétés thermiques de l'embase, tout en permettant à cette dernière de présenter une bonne tenue en service, grâce à la présence d'une couche superficielle 6 de protection en acier inoxydable.

On notera enfin que ladite couche superficielle 6, par ses ajours, permet également un rattrapage de la surépaisseur que pourrait constituer l'élément décoratif rapporté 7, de telle sorte qu'en définitive le dispositif de cuisson présente une surface d'embase globalement plane.

### POSSIBILITE D'APPLICATION INDUSTRIELLE

L'invention trouve son application industrielle dans la fabrication d'ustensiles destinés à la cuisson, notamment d'aliments.

## Revendications

1. Dispositif de cuisson d'aliments comprenant :
- un récipient (1) destiné à accueillir les aliments et pourvu d'un fond (2) présentant une face interne (2A) et une face externe (2B) opposée, ladite face externe (2B) étant destinée à être disposée en regard d'un moyen de chauffage,
- une embase (4) rapportée sur la face externe (2B) et comprenant d'une part, une couche intermédiaire (5) solidarisée à la face externe (2B), et d'autre part, une couche superficielle (6) solidarisée à la couche intermédiaire (5) et recouvrant cette dernière,
la couche superficielle (6) étant percée d'au moins un ajour (6A-D), lequel est destiné à accueillir de façon sensiblement ajustée une pièce ornementale (7) délimitée par une périphérie latérale (100), **caractérisé en ce que** ladite pièce ornementale (7) est directement liée, par une première opération de compression à chaud, à la couche intermédiaire (5), de façon à ce que d'une part la pièce ornementale (7) s'étende sensiblement dans la continuité de la couche superficielle (6), et d'autre part la périphérie latérale (100) de la pièce ornementale (7) soit liée de façon intime et directe à la couche superficielle (6).

2. Dispositif selon la revendication 1 **caractérisé en ce que** la première opération de compression à chaud est une opération de frappe à chaud.

3. Dispositif selon la revendication 1 ou 2 **caractérisé en ce que** la couche superficielle (6) est solidarisée directement à la couche intermédiaire (5) par une deuxième opération de compression à chaud, qui est de préférence une opération de frappe à chaud.

4. Dispositif selon l'une des revendications 1 à 3 **caractérisé en ce que** la couche intermédiaire (5) est solidarisée directement à la face externe (2B) par une troisième opération de compression à chaud, qui est de préférence une opération de frappe à chaud.

5. Dispositif selon la revendication 1 **caractérisé en ce que** la face externe 2B du fond 2, la couche intermédiaire 5, la couche superficielle 6, ainsi que la pièce ornementale 7 sont solidarisées ensemble, de façon sensiblement uniforme sur toutes leurs interfaces de contact respectives, par une opération unique et commune de compression à chaud.

6. Dispositif selon l'une des revendications précédentes **caractérisé en ce que** ladite couche intermédiaire (5) est réalisée à partir d'un matériau bon conducteur de chaleur, par exemple à base d'aluminium et/ou de cuivre.

7. Dispositif selon l'une des revendications précédentes **caractérisé en ce que** le récipient (1) est réalisé à partir d'un premier matériau présentant de bonnes propriétés de tenue en service, du genre résistance mécanique, résistance à la corrosion.

8. Dispositif selon la revendication 7 **caractérisé en ce que** ledit premier matériau est à base d'acier inoxydable austénitique.

9. Dispositif selon l'une des revendications précédentes **caractérisé en ce que** la couche superficielle (6) est réalisée à partir d'un deuxième matériau présentant de bonnes propriétés de tenue en service, du genre résistance mécanique, résistance à la corrosion.

10. Dispositif selon la revendication 9 **caractérisé en ce que** ledit deuxième matériau est un acier inoxydable ferritique.

11. Dispositif selon l'une des revendications précédentes **caractérisé en ce que** la pièce ornementale (7) est réalisée à partir d'un ou plusieurs des matériaux du groupe suivant : cuivre, titane, laiton, fer, nickel, acier.

12. Dispositif selon l'une des revendications précédentes **caractérisé en ce que** la pièce ornementale (7) comprend une plaque positionnée dans un ajour (6B) ménagé sensiblement au centre de la couche superficielle.

13. Dispositif selon l'une des revendications précédentes **caractérisé en ce qu'**il est constitué par un des ustensiles du groupe suivant : autocuiseur sous pression, casserole, poêle, marmite, bouilloire.

14. Procédé de fabrication d'un dispositif de cuisson d'aliments comprenant au moins les étapes suivantes :
a) réalisation ou fourniture d'un récipient (1) destiné à accueillir les aliments et pourvu d'un fond (2) présentant une face interne (2A) et une face externe (2B) opposée, ladite face externe (2B) étant destinée à être disposée en regard d'un moyen de chauffage ;
b) positionnement contre ladite face externe (2B) d'une couche intermédiaire (5) ;
c) solidarisation de la couche intermédiaire (5) à là face externe (2B) ;
d) recouvrement de la couche intermédiaire (5) par une couche superficielle (6) ;
e) solidarisation de la couche superficielle (6) à la couche intermédiaire (5) ;
ledit procédé comprenant :
- préalablement à l'étape d), une étape f) d'ajourage de la couche superficielle (6) de façon à ce qu'elle soit percée d'au moins un ajour (6A-D), ou de fourniture d'une couche superficielle (6) préalablement ajourée,
- postérieurement à l'étape d), une étape g) de positionnement de façon sensiblement ajustée d'au moins une pièce ornementale (7), délimitée par une périphérie latérale (100), dans l'ajour (6B) correspondant,
ledit procédé étant **caractérisé en ce qu'**il comprend, postérieurement à l'étape g), une étape h) de solidarisation directe par une première opération de compression à chaud d'au moins la couche intermédiaire (5) et la pièce ornementale (7), de façon à ce que d'une part la pièce ornementale (7) s'étende sensiblement dans la continuité de la couche superficielle (6), et d'autre part que la périphérie latérale (100) de la pièce ornementale (7) soit liée, de façon intime et directe, à la couche superficielle (6).

15. Procédé selon la revendication 14 **caractérisé en ce que** la première opération de compression à chaud est une opération de frappe à chaud.

16. Procédé selon l'une des revendications 14 ou 15 **caractérisé en ce que** l'étape e) est réalisée par une deuxième opération de compression à chaud, qui est de préférence une opération de frappe à chaud.

17. Procédé selon l'une des revendications 14 à 16 **caractérisé en ce que** l'étape c) est réalisée par une troisième opération de compression à chaud, qui est de préférence une opération de frappe à chaud.

18. Procédé selon les revendications 16 et 17 **caractérisé en ce que** les étapes c), e) et h) sont réalisées simultanément par une unique opération de compression à chaud, qui est de préférence une opération de frappe à chaud.

19. Procédé selon l'une des revendications 14 à 18 **caractérisé en ce qu'**il comprend une étape i), dans laquelle on réalise une couche superficielle (6) en forme de coupelle, de façon à ce que lors de l'étape d) et/ou de l'étape e), la couche superficielle (6) soit susceptible d'englober la couche intermédiaire (5), en s'appuyant contre la face externe (2B).

20. Procédé selon les revendications 18 et 19 **caractérisé en ce que** les étapes c), e), h) et i) sont réalisées simultanément par une unique opération de compression à chaud, qui est de préférence une opération de frappe à chaud.

21. Procédé selon l'une des revendications 14 à 20 **caractérisé en ce que** le récipient (1) est réalisé à partir d'un flan en acier inoxydable austénitique, la couche intermédiaire (5) est réalisée à partir d'un flan en aluminium et/ou en cuivre, la couche superficielle (6) est réalisée à partir d'un flan en acier inoxydable ferritique et la pièce ornementale (7) est réalisée à partir d'un flan à base d'un ou plusieurs des matériaux suivants : cuivre, titane, laiton, fer, nickel, acier.

22. Procédé de fabrication d'un des ustensiles du groupe suivant: autocuiseur sous pression, casserole, poêle, marmite, bouilloire, **caractérisé en ce qu'**il est conforme à l'une des revendications 14 à 21.

## Claims

1. Device for cooking food, comprising:
- a vessel (1) which is designed to hold the food and is provided with a bottom (2) having an internal face (2A) and an opposite external face (2B), said external face (2B) being designed to be arranged facing towards a heating means;
- a base (4) which is attached to the external face (2B) and comprises, on the one hand, an intermediate layer (5) fixed to the external face (2B) and, on the other hand, a surface layer (6) fixed to the intermediate layer (5) and covering the latter,
the surface layer (6) being pierced by at least one aperture (6A-D) which is intended to receive, in a manner substantially fitted therein, an ornamental piece (7) which is delimited by a lateral periphery (100), **characterized in that** said ornamental piece (7) is directly bonded, by a first hot pressing operation, to the intermediate layer (5) so that, on the one hand, the ornamental piece (7) extends substantially in the continuation of the surface layer (6) and, on the other hand, the lateral periphery (100) of the ornamental piece (7) is bonded intimately with and directly to the surface layer (6).

2. Device according to Claim 1, **characterized in that** the first hot pressing operation is a hot stamping operation.

3. Device according to Claim 1 or 2, **characterized in that** the surface layer (6) is fixed directly to the intermediate layer (5) by a second hot pressing operation, which is preferably a hot stamping operation.

4. Device according to one of Claims 1 to 3, **characterized in that** the intermediate layer (5) is fixed directly to the external face (2B) by a third hot pressing operation, which is preferably a hot stamping operation.

5. Device according to Claim 1, **characterized in that** the external face (2B) of the bottom (2), the intermediate layer (5), the surface layer (6) and the ornamental piece (7) are fixed together, in a substantially uniform manner over all their respective contact interfaces, by a single and common hot pressing operation.

6. Device according to one of the preceding claims, **characterized in that** said intermediate layer (5) is made from a material that is a good heat conductor, for example a material based on aluminium and/or copper.

7. Device according to one of the preceding claims, **characterized in that** the vessel (1) is made from a first material which exhibits good durability properties in service, of the mechanical strength and corrosion resistance type.

8. Device according to Claim 7, **characterized in that** said first material is based on austenitic stainless steel.

9. Device according to one of the preceding claims, **characterized in that** the surface layer (6) is made from a second material which exhibits good durability properties in service, of the mechanical strength and corrosion resistance type.

10. Device according to Claim 9, **characterized in that** said second material is a ferritic stainless steel.

11. Device according to one of the preceding claims, **characterized in that** the ornamental piece (7) is made from one or more of the materials selected from the following group: copper, titanium, brass, iron, nickel, steel.

12. Device according to one of the preceding claims, **characterized in that** the ornamental piece (7) comprises a plate positioned in an aperture (6B) made approximately in the centre of the surface layer.

13. Device according to one of the preceding claims, **characterized in that** it consists of one of the utensils selected from the following group: pressure cooker, saucepan, frying pan, stockpot, kettle.

14. Method for manufacturing a device for cooking food, comprising at least the following steps:
a) producing or supplying a vessel (1) which is designed to hold the food and is provided with a bottom (2) having an internal face (2A) and an opposite external face (2B), said external face (2B) being designed to be arranged facing towards a heating means;
b) positioning an intermediate layer (5) against said external face (2B);
c) fixing the intermediate layer (5) to the external face (2B) ;
d) covering the intermediate layer (5) with a surface layer (6);
e) fixing the surface layer (6) to the intermediate layer (5);
said method comprising:
- prior to step d), a step f) of perforating the surface layer (6) so that it is pierced by at least one aperture (6A-D), or of supplying a pre-perforated surface layer (6);
- after step d), a step g) of positioning, in a substantially fitted manner, at least one ornamental piece (7) which is delimited by a lateral periphery (100) in the corresponding aperture (6B),
said method being **characterized in that** it comprises, after step g), a step h) of directly fixing, by a first hot pressing operation, at least the intermediate layer (5) to the ornamental piece (7) so that, on the one hand, the ornamental piece (7) extends substantially in the continuation of the surface layer (6) and, on the other hand, the lateral periphery (100) of the ornamental piece (7) is bonded intimately with and directly to the surface layer (6).

15. Method according to Claim 14, **characterized in that** the first hot pressing operation is a hot stamping operation.

16. Method according to either of Claims 14 or 15, **characterized in that** step e) is carried out by a second hot pressing operation, which is preferably a hot stamping operation.

17. Method according to one of Claims 14 to 16, **characterized in that** step c) is carried out by a third hot pressing operation, which is preferably a hot stamping operation.

18. Method according to Claims 16 and 17, **characterized in that** steps c), e) and h) are carried out simultaneously by a single hot pressing operation, which is preferably a hot stamping operation.

19. Method according to one of Claims 14 to 18, **characterized in that** it comprises a step i) in which a surface layer (6) in the shape of a dish is formed, so that, during step d) and/or step e), the surface layer (6) is able to encompass the intermediate layer (5), while bearing against the external face (2B).

20. Method according to Claims 18 and 19, **characterized in that** steps c), e), h) and i) are carried out simultaneously by a single hot pressing operation, which is preferably a hot stamping operation.

21. Method according to one of Claims 14 to 20, **characterized in that** the vessel (1) is made from an austenitic stainless steel blank, the intermediate layer (5) is made from an aluminium and/or copper blank, the surface layer (6) is made from a ferritic stainless steel blank, and the ornamental piece (7) is made from a blank based on one or more of the following materials: copper, titanium, brass, iron, nickel, steel.

22. Method for manufacturing one of the utensils selected from the following group: pressure cooker, saucepan, frying pan, stockpot, kettle, **characterized in that** it is in accordance with one of Claims 14 to 21.

## Patentansprüche

1. Kochvorrichtung für Nahrungsmittel, umfassend:
- einen Behälter (1), der dazu bestimmt ist, die Nahrungsmittel aufzunehmen, und der mit einem Boden (2) versehen ist, der eine Innenseite (2A) und eine gegenüber liegende Außenseite (2B) aufweist, wobei die Außenseite (2B) dazu bestimmt ist, gegenüber einem Heizmittel angeordnet zu werden,
- einen Sockel (4), der auf die Außenseite (2B) aufgesetzt ist und einerseits eine Zwischenschicht (5), die mit der Außenseite (2B) verbunden ist, und andererseits eine Oberflächenschicht (6) umfasst, die mit der Zwischenschicht (5) verbunden ist und diese abdeckt,
wobei die Oberflächenschicht (6) mit mindestens einem Loch (6A-D) durchbohrt ist, das dazu bestimmt ist, auf im Wesentlichen eingepasste Weise einen Zierteil (7) aufzunehmen, der von einer seitlichen Peripherie (100) begrenzt ist, **dadurch gekennzeichnet, dass** der Zierteil (7) direkt durch einen ersten Heißkompressionsschritt mit der Zwischenschicht (5) verbunden ist, damit sich einerseits der Zierteil (7) im Wesentlichen in der Kontinuität der Oberflächenschicht (6) erstreckt und andererseits die seitliche Peripherie (100) des Zierteils (7) eng und direkt mit der Oberflächenschicht (6) verbunden ist.

2. Vorrichtung nach Anspruch 1, **dadurch gekennzeichnet, dass** der erste Heißkompressionsschritt ein Heißprägeschritt ist.

3. Vorrichtung nach Anspruch 1 oder 2, **dadurch gekennzeichnet, dass** die Oberflächenschicht (6) direkt mit der Zwischenschicht (5) durch einen zweiten Heißkompressionsschritt verbunden ist, der vorzugsweise ein Heißprägeschritt ist.

4. Vorrichtung nach einem der Ansprüche 1 bis 3, **dadurch gekennzeichnet, dass** die Zwischenschicht (5) direkt mit der Außenseite (2B) durch einen dritten IIeißkompressionsschritt, der vorzugsweise ein Heißprägeschritt ist, verbunden ist.

5. Vorrichtung nach Anspruch 1, **dadurch gekennzeichnet, dass** die Außenseite (2B) des Bodens (2), die Zwischenschicht (5), die Oberflächenschicht (6) sowie der Zierteil (7) miteinander im Wesentlichen einheitlich auf all ihren jeweiligen Kontaktflächen durch einen einzigen und gemeinsamen Heißkompressionsschritt verbunden sind.

6. Vorrichtung nach einem der vorhergehenden Ansprüche, **dadurch gekennzeichnet, dass** die Zwischenschicht (5) aus e.inem gut Wärme leitenden Material, bei.spiel.sweise auf Basis von Aluminium und/oder Kupfer, hergestellt ist.

7. Vorrichtung nach einem der vorhergehenden Ansprüche, **dadurch gekennzeichnet, dass** der Behälter (1) aus einem ersten Material besteht, das gute Betriebsbeständigkeitseigenschaften von der Art mechanische Festigkeit und Korrosionsbeständigkeit aufweist.

8. Vorrichtung nach Anspruch 7, **dadurch gekennzeichnet, dass** das erste Material auf Basis von rostfreiem Austenitstahl ist.

9. Vorrichtung nach einem der vorhergehenden Ansprüche, **dadurch gekennzeichnet, dass** die Oberflächenschicht (6) aus einem zweiten Material hergestellt ist, das gute Betri.ebsbeständi.qkeitseigenschaften von der Art mechanische Festigkeit und Korrosionsbeständigkeit aufweist.

10. Vorrichtung nach Anspruch 9, **dadurch gekennzeichnet, dass** das zweiLe Material ein rostfreier Ferritstahl ist.

11. Vorrichtung nach einem der vorhergehenden Ansprüche, **dadurch gekennzeichnet, dass** der Zierteil (7) aus einem oder mehreren Materialien der folgenden Gruppe hergestellt ist: Kupfer, Titan, Messing, Eisen, Nickel, Stahl.

12. Vorrichtung nach einem der vorhergehenden Ansprüche, **dadurch gekennzeichnet, dass** der Zierteil (7) eine Platte umfasst, die in einem Loch (6B) angeordnet ist, das im Wesentlichen in der Mitte der Oberflächenschicht vorgesehen ist.

13. Vorrichtung nach einem der vorhergehenden Ansprüche, **dadurch gekennzeichnet, dass** sie von einem oder mehreren Utensilien der folgenden Gruppe gebildet ist: Druckkochtopf, Schmorpfanne, Bratpfanne, Topf, Wasserkessel.

14. Verfahren zur Herstellung einer Kochvorrichtung für Nahrungsmittel, umfassend mindestens die folgenden Schritte:
a) Herstellung oder Lieferung eines Behälters (1), der dazu bestimmt ist, die Nahrungsmittel aufzunehmen, und der mit einem Boden (2) versehen isL, der eine Innenseite (2A) und eine gegenüber liegende Außenseite (2B) aufweist, wobei die Außenseiten (2B) dazu bestimmt ist, gegenüber einem Heizmittel angeordnet zu werden;
b) Positionierung einer Zwischenschicht (5) an der Außenseite (2B);
c) Verbindung der Zwischenschicht (5) mit der Außenseite (2B);
d) Abdecken der Zwischenschicht (5) mit einer Oberflächenschicht (6);
e) Verbindung der Oberflächenschicht (6) mit der Zwischenschicht (5);
wobei das Verfahren umfasst:
- vor dem Schritt d) einen Schritt f) des Lochens der Oberflächenschicht (6), so dass sie mit mindestens einem Loch (6A-D) versehen ist, oder des Lieferns einer Oberflächenschicht (6), die vorher gelocht wurde,
- nach dem SchriLL d) einen Schritt g) der Positionierung mindestens eines ZierLeils (7) auf im Wesentlichen eingepasste Weise in der entsprechenden Öffnung (6B), welcher von einer seitlichen Peripherie (100) begrenzt ist,
wobei das Verfahren **dadurch gekennzeichnet ist, dass** es nach dem Schritt g) einen Schritt h) der direkten Verbindung durch einen ersten Schritt der Heiß kompression von mindestens der Zwischenschicht (5) und des Zierteils (7) umfasst, so dass sich einerseits der Zierteil (7) im Wesentlichen in der Kontinuität der oberflächenschicht (6) erstreckt und andererseits die seitliche Peripherie (100) des Zierteils (7) auf enge und direkte Weise mit der Oberflächenschicht (6) verbunden ist.

15. Verfahren nach Anspruch 14, **dadurch gekennzeichnet, dass** der erste Heißkompressionsschritt ein Heißprägeschritt ist.

16. Verfahren nach einem der Ansprüche 14 oder 15, **dadurch gekennzeichnet, dass** der Schritt e) durch einen zweiten Schritt der Heißkompression, der vorzugsweise ein Heißprägeschritt ist, durchgeführt wird.

17. Verfahren nach einem der Ansprüche 14 bis 16, **dadurch gekennzeichnet, dass** der Schritt c) durch einen dritten Schritt der Heißkompression, der vorzugsweise ein Heißprägeschritt ist, erfolgt.

18. Verfahren nach den Ansprüchen 16 und 17, **dadurch gekennzeichnet, dass** die Schritte c), e) und h) gleichzeitig durch einen einzigen Heißkompressionsschritt, der vorzugsweise ein Heißprägeschritt ist, erfolgen.

19. Verfahren nach einem der Ansprüche 14 bis 18, **dadurch gekennzeichnet, dass** es einen Schritt i) umfasst, in dem eine Oberflächenschicht (6) in Schalenform hergestellt wird, so dass in Schritt d) und/oder Schritt e) die Oberflächenschicht (6) die Zwischenschicht (5) umgeben kann, wobei sie sich an die Außenseite (2B) anlegt.

20. Verfahren nach den Ansprüchen 18 und 19, **dadurch gekennzeichnet, dass** die Schritte c), e), h) und i) gleichzeitig durch einen einzigen Heißkompressionsschritt erfolgen, der vorzugsweise ein Heißprägeschritt ist.

21. Verfahren nach einem der Ansprüche 14 bis 20, **dadurch gekennzeichnet, dass** der Behälter (1) aus einem Zuschnitt aus rostfreiem Austenitstahl hergestellt ist, die Zwischenschicht (5) aus einem Zuschnitt aus Aluminium und/oder Kupfer hergestellt ist, die Oberflächenschicht (6) aus einem Zuschnitt aus rostfreiem Ferritstahl hergestellt ist, und der Zierteil (7) aus einem Zuschnitt auf Basis eines oder mehrerer der folgenden Materialien hergestellt ist: Kupfer, Titan, Messing, Eisen, Nickel, Stahl.

22. Verfahren zur Herstellung eines der Utensilien der folgenden Gruppe: Druckkochtopf, Schmorpfanne, Bratpfanne, Topf, Wasserkessel, **dadurch gekennzeichnet, dass** es einem der Ansprüche 14 bis 21 entspricht.
